# EUROPEAN PATENT APPLICATION

(11) **EP 4 621 461 A1**
(43) Date of publication of application: **24.09.2025**
(21) Application number: 23905678.1
(22) Date of filing: 04.12.2023
(51) Int. Cl.: G02B 6/38

(54) **FIBER OPTIC CONNECTOR, OPTICAL DISTRIBUTION NETWORK DEVICE, AND OPTICAL COMMUNICATION SYSTEM**

(30) Priority: 21.12.2022 CN 202223489329 U
(71) Applicant: Huawei Technologies Co., Ltd., Shenzhen, Guangdong 518129 (CN)
(72) Inventor: LI, Weibo, Shenzhen, Guangdong 518129 (CN); GONG, Tao, Shenzhen, Guangdong 518129 (CN); ZHENG, Fei, Shenzhen, Guangdong 518129 (CN)
(74) Representative: Körber, Martin Hans
(86) International application number: PCT/CN2023/136141
(87) International publication number: WO 2024/131511

(57) **Abstract**

An optical fiber connector (103a, 103b, 103c), an optical distribution network device (1), and an optical communication system (1000) are provided. The optical fiber connector (103a, 103b, 103c) includes a first ferrule (32), a second ferrule (34), a fiber grating (10), and a housing part (50). The fiber grating (10) penetrates through the first ferrule (32) and the second ferrule (34). The housing part (50) is sleeved on the first ferrule (32) and the second ferrule (34). The optical fiber connector (103a, 103b, 103c) can be optically interconnected to a network port (1011) on the optical distribution network device (1). An optical signal uploaded from an optical network terminal (1003) is modulated by the optical fiber connector (103a, 103b, 103c) and then arrives at an optical line terminal (1001). The modulated optical signal is identified and analyzed by an optical artificial intelligence module (1005) and then uploaded to a cloud server (2000), to mark a network port (1011) occupied by each optical distribution network device (1). A user may use cloud application software to display cascaded optical path topology information stored in the cloud server (2000), to implement segmented optical path operation and maintenance without network reconstruction of an optical splitter (101), thereby implementing "visualized management" of the network port (1011), and facilitating resource management of the network port (1011).

## Description

This application claims priority to Chinese Patent Application No. 202223489329.8, filed with the China National Intellectual Property Administration on December 21, 2022, and entitled "OPTICAL FIBER CONNECTOR, OPTICAL DISTRIBUTION NETWORK DEVICE, AND OPTICAL COMMUNICATION SYSTEM", which is incorporated herein by reference in its entirety.

### TECHNICAL FIELD

This application relates to optical communication technologies, and in particular, to an optical fiber connector, an optical distribution network device, and an optical communication system.

### BACKGROUND

As requirements on high-speed information propagation are increasingly high, optical fibers, as high-speed information carriers, are increasingly widely used. Especially in the 5G era, optical fiber lines are increasingly widely used, and a quantity of network ports of an optical distribution network (optical distribution network, ODN) increases geometrically. How to manage network port resources becomes an urgent problem to be resolved.

In a solution, a fiber grating configured to modulate an optical signal may be disposed on an optical splitter of an ODN device. The optical signal is reported from an optical network terminal (optical network terminal, ONT) side. The optical signal is modulated by the fiber grating on the optical splitter of the ODN device. An optical artificial intelligence (optical artificial intelligence, OAI) module inserted into an optical switch unit (optical switch unit, OSU) on an optical line terminal (optical line terminal, OLT) side identifies a modulated optical signal and reads information about an optical channel to restore an ODN network topology, to identify network ports that are occupied. However, no fiber grating is disposed on an optical splitter in an existing network. If the solution is used, the optical splitter in the existing network needs to be removed first, and then replaced with an optical splitter with a fiber grating. This makes operations complex, and is not conducive to reconstruction of the existing network.

### SUMMARY

Implementations of this application provide an optical fiber connector, an optical distribution network device, and an optical communication system that can simplify operations, facilitate existing network reconstruction, and manage and maintain network port resources.

An embodiment of this application provides an optical fiber connector, including:
a first ferrule;
a second ferrule;
a fiber grating, penetrating through the first ferrule and the second ferrule; and
a housing part, including an inner frame sleeve, a main shaft, a handle, and a sealing ring, where the inner sleeve is sleeved on the first ferrule and the second ferrule, the main shaft is connected to the inner frame sleeve, the handle is sleeved on the main shaft, and the sealing ring is sleeved on the handle or the main shaft.

The fiber grating is a diffraction grating formed by performing axial periodic modulation on a refractive index of a fiber core by using a specific method, and is a passive filter component. A fiber grating capable of modulating an optical signal is disposed on the optical fiber connector. The optical fiber connector can be optically interconnected to a network port of an optical splitter on the optical distribution network device.

An optical signal uploaded from an optical network terminal is modulated by the optical fiber connector and then arrives at an optical line terminal. An optical artificial intelligence module is configured to identify and analyze a modulated optical signal, and upload the modulated optical signal to a cloud server, to mark a network port occupied by each optical distribution network device. A user may use cloud application software to display cascaded optical path topology information stored in the cloud server, to implement segmented optical path operation and maintenance without network reconstruction of the optical splitter, thereby implementing "visualized management" of the network port, and facilitating resource management of the network port. Because an optical splitter, an optical adapter, and the like on an existing network do not need to be disassembled or replaced, only the optical fiber connector needs to be inserted into the optical adapter. Operations are simple, and this facilitates reconstruction of the existing network.

The optical fiber connector has the sealing ring. The sealing ring may be sleeved on the handle, and is configured to be connected to a pre-connectorized optical connector in a sealed manner when the handle is connected to the pre-connectorized optical connector, to maintain air tightness, so that the optical fiber connector has high waterproof and dustproof performance, and therefore can adapt to a complex outdoor environment.

The sealing ring may be sleeved on the main shaft, and is configured to connect the main shaft to the handle in a sealed manner, to cope with the complex outdoor environment.

The sealing ring may be sleeved on the handle, and is configured to implement sealed connection between the optical fiber connector and the optical adapter when the optical fiber connector is optically interconnected to the optical adapter, to cope with the complex outdoor environment.

According to the first aspect, in a possible implementation of this application, the first ferrule and the second ferrule are disposed integrally, and the fiber grating is accommodated in the housing part. The first ferrule and the second ferrule are disposed integrally, facilitating simplification of a structure of the optical fiber connector and reduction of an axial length of the optical fiber connector.

According to the first aspect, in a possible implementation of this application, the first ferrule and the second ferrule are disposed separately. The first ferrule and the second ferrule are disposed separately, to simplify a manufacturing process of the optical fiber connector.

According to the first aspect, in a possible implementation of this application, the optical fiber connector further includes a package body. The package body coats a part of the fiber grating, and is configured to protect the fiber grating and buffer an impact of an external force on the fiber grating.

According to the first aspect, in a possible implementation of this application, the optical fiber connector further includes a protective sleeve. The package body is accommodated in the protective sleeve, and the protective sleeve is located outside the housing part. The protective sleeve is configured to protect the package body.

According to the first aspect, in a possible implementation of this application, a filling opening is provided on the protective sleeve, and the filling opening is configured to fill the package body into the protective sleeve.

According to the first aspect, in a possible implementation of this application, in an axial direction of the protective sleeve, the protective sleeve includes a first optical cable interface provided close to the first ferrule. The optical fiber connector further includes a first coating layer and a first reinforcing piece. The first coating layer coats the fiber grating, and the first reinforcing piece is flexibly connected to the package body at the first optical cable interface.

In a conventional technology, when the optical fiber connector is optically interconnected to the optical adapter or another optical connection apparatus, and the optical fiber connector is connected to the pre-connectorized optical connector or the another optical connection apparatus, accuracy of the optical interconnection of the optical fiber connector is easily affected if the fiber grating is affected by an external load, and optical transmission quality is further affected.

The flexible connection means that the fiber grating in the optical fiber connector may be stretched, bent, and twisted freely under separated ferrule arrangement.

In this application, the fiber grating is separately packaged in the package body outside a first housing assembly and a second housing assembly, and the package body is flexibly connected to the first reinforcing piece, to reduce impact of the first housing assembly and the second housing assembly on a load of the fiber grating, and facilitate improvement of precision and reliability of optical interconnection of the optical fiber connector.

According to the first aspect, in a possible implementation of this application, the housing part includes the first housing assembly and the second housing assembly. The first housing assembly and the second housing assembly each includes the inner frame sleeve, the main shaft, and the handle. The inner sleeve of the first housing assembly is sleeved on the first ferrule, the main shaft of the first housing assembly is connected to the inner sleeve of the first housing assembly, and the handle of the first housing assembly is sleeved on the main shaft. The inner sleeve of the second housing assembly is sleeved on the second ferrule, the main shaft of the second housing assembly is connected to the inner sleeve of the second housing assembly, and the handle of the second housing assembly is sleeved on the main shaft of the second housing assembly.

According to the first aspect, in a possible implementation of this application, the optical fiber connector further includes a package body coating the fiber grating. The package body is accommodated in at least one of the main shaft of the first housing assembly and the main shaft of the second housing assembly. The main shaft of the second housing assembly is sleeved on a ferrule base of the second housing assembly. An end face of the main shaft of the first housing assembly is opposite to an end face of the main shaft of the second housing assembly, and an end face of the handle of the first housing assembly is opposite to an end face of the handle of the second housing assembly. The sealing rings are sleeved on the main shaft of the first housing assembly and the main shaft of the second housing assembly, and the sealing rings are accommodated in the handle of the first housing assembly and/or the handle of the second housing assembly.

Because the main shaft of the first housing assembly and the main shaft of the second housing assembly are spliced together, the handle of the first housing assembly and the handle of the second housing assembly are spliced together. The first housing assembly and the second housing assembly that are disposed separately are spliced into a whole, facilitating reduction of the axial length of the optical fiber connector.

According to the first aspect, in a possible implementation of this application, a ferrule base of the first housing assembly is fastened to the first ferrule, and the ferrule base of the second housing assembly is fastened to the second ferrule. The first ferrule, the ferrule base of the first housing assembly, the ferrule base of the second housing assembly, and the second ferrule are sequentially arranged in an axial direction of the optical fiber connector. The fiber grating penetrates through the ferrule base of the first housing assembly and the ferrule base of the second housing assembly. The main shaft of the first housing assembly is sleeved on the ferrule base of the first housing assembly, and the main shaft of the second housing assembly is sleeved on the ferrule base of the second housing assembly.

The ferrule base is configured to protect the fiber grating that penetrates through the ferrule base.

According to the first aspect, in a possible implementation of this application, the package body is accommodated in the first ferrule base and the second ferrule base.

The package body is accommodated in the ferrule base of the first housing assembly and the ferrule base of the second housing assembly, so that the fiber grating, the first ferrule, the second ferrule, the first housing assembly, and the second housing assembly form a whole, and the fiber grating cannot move along the optical fiber connector. This is equivalent to that the fiber grating is rigidly connected to the first ferrule, the second ferrule, the first housing assembly, and the second housing assembly. This facilitates improvement of reliability of the optical fiber connector.

According to the first aspect, in a possible implementation of this application, a first joint portion is provided on an inner wall of the main shaft, a second joint portion is provided on an outer wall of the ferrule base, and the first joint portion fits the second joint portion in a snapping manner. The main shaft is connected to the ferrule base in a snapping manner, facilitating assembly and disassembly of the optical fiber connector.

According to the first aspect, in a possible implementation of this application, a first connection portion is provided on an inner wall of the inner frame sleeve, a second connection portion is provided on an outer wall of the ferrule base, and the first connection portion is connected to the second connection portion in a snapping manner. The inner sleeve is connected to the ferrule base in a snapping manner, facilitating assembly and disassembly of the optical fiber connector.

According to the first aspect, in a possible implementation of this application, a first snapping portion is provided on an inner wall of the inner frame sleeve, a second snapping portion is provided on the main shaft, and the first snapping portion is connected to the second snapping portion in a snapping manner. The inner sleeve is connected to the main shaft in a snapping manner, facilitating assembly and disassembly of the optical fiber connector.

According to the first aspect, in a possible implementation of this application, the main shaft includes an inner cylinder and an outer cylinder that are connected, the second snapping portion is in the outer cylinder, and the inner sleeve is accommodated in the outer cylinder, and the inner sleeve is snapped between the inner cylinder and the outer cylinder, so that the main shaft limits the inner frame sleeve.

According to the first aspect, in a possible implementation of this application, a flange is disposed on an outer wall of the outer cylinder. The handle includes a first end portion and a second end portion that are arranged opposite to each other. A fitting portion and a limiting boss are provided on an inner wall of the first end portion, and the flange is limited between the fitting portion and the limiting boss in an axial direction of the main shaft, so that the handle and the main shaft are connected together, and the handle can be rotated relative to the main shaft.

The flange is limited between the fitting portion and the limiting boss in the axial direction of the main shaft, so that axial movement of the handle 56 relative to the main shaft 53 is limited and the handle 56 cannot move in the axial direction of the main shaft, and the handle can be rotated around a circumferential direction of the handle, facilitating circumferential adjustment when the optical fiber connector is connected to the optical adapter or the another optical connection apparatus.

According to the first aspect, in a possible implementation of this application, a limiting portion is provided on the flange, and the limiting portion is a notch that runs through the flange in the axial direction of the main shaft. The fitting portion is a convex portion, and the fitting portion abuts against the flange.

During assembly, the main shaft is first pushed into the handle in a direction of the main shaft, the fitting portion passes through the notch, and the flange can be limited between the limiting boss and the fitting portion, facilitating assembly of the main shaft and the handle.

According to the first aspect, in a possible implementation of this application, one of the limiting portion and the fitting portion is an elastic buckle, one of the limiting portion and the fitting portion is a groove, the groove extends in a circumferential direction of the handle, and the elastic buckle is snapped in the groove to limit the main shaft to move in the circumferential direction relative to the handle.

According to the first aspect, in a possible implementation of this application, a locking boss is further provided on the inner wall of the first end portion. An interface groove channel is provided on an interface that adapts the optical adapter to the handle. The interface groove channel of the optical adapter is configured to be connected to the locking boss in a snapping manner. The interface groove channel of the optical adapter includes a groove channel opening and a snap groove connected to the groove channel opening. The groove channel opening of the optical adapter runs through an end face of the optical adapter, and the snap groove extends in a circumferential direction of the optical adapter.

When the optical adapter and the first end portion of the handle need to be connected together, the optical adapter is inserted into the first end portion of the handle, and the locking boss enters the interface groove channel from the groove channel opening. When the locking boss cannot continue to move in an axial direction of the optical adapter, the entire optical fiber connector is rotated in one direction, for snapping the locking boss in the snap groove. In this way, the optical adapter and the handle are locked together. When the optical adapter and the handle need to be unlocked, the entire optical fiber connector is rotated in another direction, for detaching the locking boss from the snap groove. In this way, the entire optical fiber connector can be taken out of the optical adapter.

According to the first aspect, in a possible implementation of this application, an interface groove channel is provided on an outer wall of the second end portion. The interface groove channel includes a groove channel opening and a snap groove connected to the groove channel opening. The groove channel opening runs through an end face of the second end portion, and the snap groove extends in a circumferential direction of the handle.

The interface groove channel of the second end portion is configured to be connected to the pre-connectorized optical connector or the another optical connection apparatus. An example in which the interface groove channel of the second end portion is connected to the pre-connectorized optical connector is used. A coupling interface cooperating with the second end portion is provided on the pre-connectorized optical connector, and a locking key (not shown in the figure) cooperating with the interface groove channel is disposed on an inner wall of the coupling interface. When the second end portion and the pre-connectorized optical connector need to be connected, the second end portion is inserted into the coupling interface of the pre-connectorized optical connector, and the locking key can enter the interface groove channel from the groove channel opening. The pre-connectorized optical connector is rotated in one direction relative to the handle, and the locking key enters the snap groove. In this case, the pre-connectorized optical connector is locked with the handle. When the pre-connectorized optical connector and the handle need to be unlocked, the pre-connectorized optical connector is rotated in another direction relative to the handle. In this case, the locking key can be detached from the snap groove.

According to a second aspect, an embodiment of this application provides an optical distribution network device, including a network port. An optical adapter and the optical fiber connector according to the first aspect are disposed on the network port, and one end of the optical fiber connector is inserted into the optical adapter.

According to a third aspect, an embodiment of this application provides an optical communication system, including an optical distribution network, an optical network terminal, and an optical line terminal. The optical distribution network includes at least one optical distribution network device according to the second aspect.

An optical signal uploaded from an optical network terminal is modulated by the optical fiber connector and then arrives at an optical line terminal. An optical artificial intelligence module identifies and analyzes a modulated optical signal, and uploads the modulated optical signal to a cloud server, to mark a network port occupied by each optical distribution network device. A user may use cloud application software to display cascaded optical path topology information stored in the cloud server, to implement segmented optical path operation and maintenance without network reconstruction of the optical splitter, thereby implementing "visualized management" of the network port, and facilitating resource management of the network port. Because an optical splitter, an optical adapter, and the like on an existing network do not need to be disassembled or replaced, only the optical fiber connector needs to be inserted into the optical adapter, facilitating reconstruction of the existing network.

### BRIEF DESCRIPTION OF DRAWINGS

FIG. 1 is a diagram of an architecture of an optical communication system according to some implementations of this application;
FIG. 2 is a diagram of connection between two optical distribution network devices according to some implementations of this application;
FIG. 3 is a three-dimensional diagram of connection between an optical distribution network device and a prefabricated cable according to some implementations of this application;
FIG. 4 is a three-dimensional diagram of assembly of an optical fiber connector according to a first implementation of this application;
FIG. 5 is an axial sectional view of the optical fiber connector shown in FIG. 4;
FIG. 6 is a three-dimensional exploded diagram of the optical fiber connector shown in FIG. 4;
FIG. 7 is a three-dimensional exploded diagram of an inner sleeve and a main shaft of the optical fiber connector shown in FIG. 4;
FIG. 8 is a three-dimensional exploded diagram of a handle and a main shaft of the optical fiber connector shown in FIG. 4;
FIG. 9 is a side view of the optical fiber connector shown in FIG. 4 in an axial direction;
FIG. 10 is a three-dimensional diagram of assembly of the optical fiber connector shown in FIG. 4 from another perspective;
FIG. 11 is a three-dimensional diagram of an optical adapter according to some implementations of this application;
FIG. 12 is a three-dimensional diagram of assembly of the optical fiber connector shown in FIG. 4 from still another perspective;
FIG. 13 is an axial sectional view of a handle according to a possible implementation of this application;
FIG. 14a is a side view in which a main shaft and a handle of an optical fiber connector are not assembled together according to a possible implementation of this application;
FIG. 14b is a side view in which the main shaft and the handle of the optical fiber connector shown in FIG. 14a are assembled together;
FIG. 14c is a side view of the main shaft of the optical fiber connector shown in FIG. 14a;
FIG. 15 is a three-dimensional exploded diagram of an optical fiber connector according to a second implementation of this application;
FIG. 16 is a three-dimensional diagram of assembly of the optical fiber connector shown in FIG. 15;
FIG. 17 is a schematic axial sectional view of the optical fiber connector shown in FIG. 16;
FIG. 18 is a diagram of an area of a first optical fiber connector of the optical fiber connector shown in FIG. 17;
FIG. 19 is a diagram of an area of a second optical fiber connector of the optical fiber connector shown in FIG. 17;
FIG. 20 is a three-dimensional diagram in which a protective sleeve, a package body, and a fiber grating are assembled together;
FIG. 21 is a sectional view in which the protective sleeve, the package body, and the fiber grating shown in FIG. 20 are assembled together;
FIG. 22 is a three-dimensional diagram of assembly of an optical fiber connector according to a third implementation of this application;
FIG. 23 is a schematic axial sectional view of the optical fiber connector shown in FIG. 22;
FIG. 24 is a three-dimensional exploded diagram of the optical fiber connector shown in FIG. 22; and
FIG. 25 is a three-dimensional exploded diagram of a main shaft, an inner frame sleeve, and a ferrule base of the optical fiber connector shown in FIG. 22.

### DESCRIPTION OF EMBODIMENTS

As requirements on high-speed information propagation are increasingly high, optical fibers, as high-speed information carriers, are increasingly widely used. Especially in the 5G era, optical fiber lines are increasingly widely used, and a quantity of network ports of an optical distribution network (optical distribution network, ODN) increases geometrically. How to manage the network port resources becomes an urgent problem to be resolved.

In a solution, a fiber grating configured to modulate an optical signal may be disposed on an optical splitter of an ODN device. An optical signal is reported from an optical network terminal (optical network terminal, ONT). The optical signal is modulated by the fiber grating of the ODN device. An optical artificial intelligence (Optical Artificial Intelligence, OAT) module inserted into an optical switch unit (optical switch unit, OSU) on an optical line terminal (optical line terminal, OLT) side identifies the optical signal and reads information about an optical channel to restore an ODN network topology, to identify network ports that are used. However, no fiber grating is disposed on an optical splitter in an existing network. If the solution is used, the optical splitter in the existing network needs to be removed first, and then replaced with an optical splitter with a fiber grating. This makes operations complex, is not conducive to reconstruction of the existing network, and cannot meet a user's requirement for adding an operation and maintenance characteristic without replacing the optical distribution network device cannot be met.

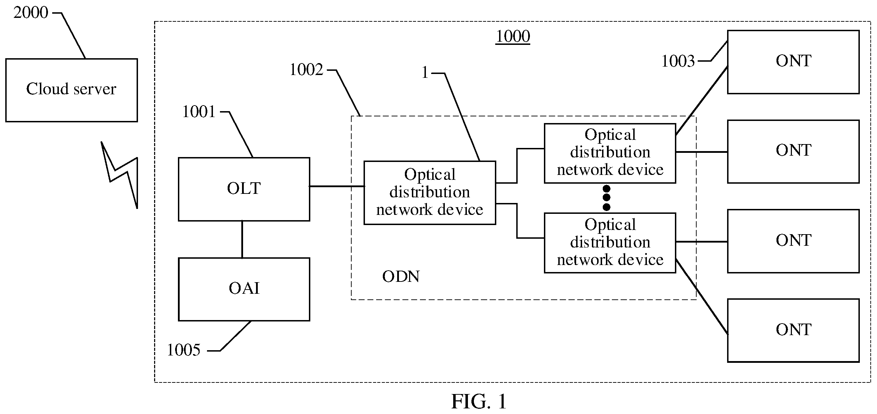

Refer to FIG. 1. An implementation of this application provides an optical communication system 1000, including an optical line terminal (optical line terminal, OLT) 1001, an optical distribution network (optical distribution network, ODN) 1002, an optical network terminal (optical network terminal, ONT) 1003, and an optical artificial intelligence (Optical Artificial Intelligence, OAT) module 1005. The optical line terminal 1001 is connected to the optical distribution network 1002. The optical line terminal 1001 may be used as a medium between another network and the optical network terminal 1003. The optical line terminal 1001 can forward data received from the another network to the optical network terminal 1003, and forward data received from the optical network terminal 1003 to the another network.

One or more optical distribution networks 1002 are connected between the optical line terminal 1001 and the optical network terminal 1003. In other words, the optical line terminal 1001 is connected to the optical network terminal 1003 via the optical distribution network 1002. The optical distribution network 1002 is configured to perform data distribution between the optical line terminal 1001 and the optical network terminal 1003. The optical distribution network 1002 may include a cascaded optical distribution network device 1. In FIG. 1, two cascaded optical distribution network devices 1 are used as an example. The optical network terminal 1003 is connected to one optical distribution network device 1. The optical artificial intelligence module 1005 is inserted into the optical line terminal 1001. It may be understood that there may alternatively be one or more optical distribution network devices 1.

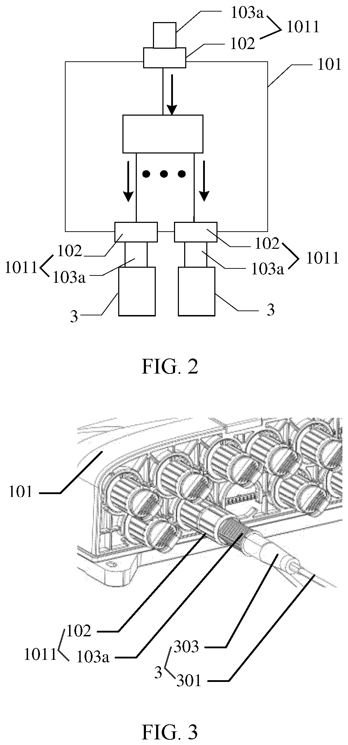

Refer to FIG. 2 and FIG. 3. The optical distribution network device 1 includes an optical splitter 101. The optical splitter 101 can split one optical signal into a plurality of signals. The optical splitter 101 is a passive component, also referred to as a light splitter, is used for optical signal coupling, splitting, and distribution, and is usually built in an auxiliary device of the ODN network. A fiber grating is disposed in an optical fiber connector 103a, and can modulate an optical signal.

The optical splitter 101 includes a plurality of network ports 1011. Based on input or output of an optical signal, the network ports 1011 may be classified into an optical inlet and an optical outlet. The optical splitter 101 inputs an optical signal through the optical inlet, and the optical splitter 101 outputs an optical signal through the optical outlet. An optical adapter 102 and the optical fiber connectors 103a are disposed on the network port 1011. One end of each optical fiber connector 103a is connected to one optical adapter 102, and the other end of each optical fiber connector 103a is connected to a pre-connectorized optical connector 303 at one end of a prefabricated cable 3. Another pre-connectorized optical connector 303 of the prefabricated cable 3 is connected to another optical distribution network device 1. It may be understood that the another pre-connectorized optical connector 303 of the prefabricated cable 3 may alternatively be configured to be connected to the optical network terminal 1003. The optical distribution network device 1 may further include other necessary or unnecessary components such as an optical cable, a coupler, and a distributor. Details are not described herein. The optical fiber connector 103a is detachably connected to the optical adapter 102. In other words, when the optical splitter 101 is installed on a network, the optical fiber connector 103a may be installed on the network port 1011. When the optical splitter 101 is not installed on the network, the optical fiber connector 103a is not connected to the optical adapter 102.

The optical fiber connector 103a has the fiber grating that modulates an optical signal. An optical signal uploaded from the optical network terminal 1003 is modulated by the optical fiber connector 103a and then arrives at the optical line terminal 1001. The optical artificial intelligence module 1005 is configured to identify and analyze the modulated optical signal, and upload the modulated optical signal to a cloud server 2000, to mark a network port 1011 occupied by each optical distribution network device 1. A user may use cloud application software to display cascaded optical path topology information stored in the cloud server 2000, to implement segmented optical path operation and maintenance without network reconstruction of the optical splitter. The optical path topology information includes information about whether each network port 1011 of each optical distribution network device 1 is occupied. After the optical signal modulated by the optical fiber connector 103a is transmitted from a corresponding network port 1011, it indicates that the network port 1011 is occupied, and in the optical path topology information, the network port 1011 is occupied correspondingly.

It may be understood that a quantity of optical fiber connectors 103a is not limited in this application. For example, there may be one optical fiber connectors 103a.

In some implementations of this application, the optical fiber connector 103a is a male-female (male-female) optical fiber connector. In other words, the optical fiber connector 103a is an optical fiber connector integrating a male end and a female end.

In some implementations of this application, the optical fiber connector 103a is an outdoor optical fiber connector used outdoors. In comparison with an indoor optical fiber connector, the optical fiber connector 103a is used in relatively open space, and needs to have a better environment adaptability to adapt to a complex and variable external environment.

It may be understood that, in this application, the optical fiber connector 103a is not limited being used in a scenario of connection to the network port 1011, and the optical fiber connector 103a may alternatively be used in another optical connection scenario. In addition, in some implementations of this application, the optical fiber connector 103a may alternatively be an indoor optical fiber connector.

In some implementations of this application, the optical distribution network device 1 includes a network port 1011, an optical adapter 102 and an optical fiber connector 103a are disposed on the network port 1011, and one end of the optical fiber connector 103a is inserted into the optical adapter 102.

In some implementations of this application, an optical communication system includes an optical distribution network 1002, an optical network terminal 1003, and an optical line terminal 1001. The optical distribution network 1002 includes at least one optical distribution network device 1.

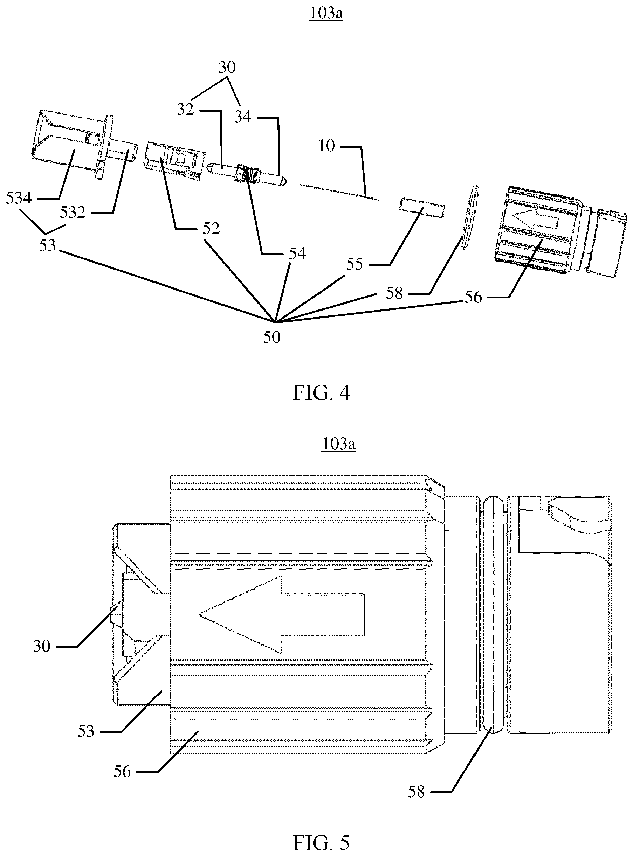

Refer to FIG. 4, FIG. 5, and FIG. 6. A first implementation of this application provides an optical fiber connector 103a, including a fiber grating 10, a ferrule part 30, and a housing part 50. The fiber grating 10 penetrates through the ferrule part 30, and is configured to modulate an optical signal that is incident to the fiber grating 10. The fiber grating is a diffraction grating formed by performing axial periodic modulation on a refractive index of a fiber core by using a specific method, and is a passive filter component. The housing part 50 is sleeved on the ferrule part 30, and is configured to be connected to an optical adapter 102 and a pre-connectorized optical connector 303.

The ferrule part 30 includes a first ferrule 32 and a second ferrule 34 that are disposed integrally. The first ferrule 32 and the second ferrule 34 are disposed in an axial direction of the optical fiber connector 103a. The fiber grating 10 is separately connected to the first ferrule 32 and the second ferrule 34, and the fiber grating 10 may penetrate through the first ferrule 32 and the second ferrule 34. The fiber grating 10 inserted into the first ferrule 32 is optically interconnected to the optical adapter 102. The fiber grating 10 inserted into the second ferrule 34 is configured to be optically interconnected to the pre-connectorized optical connector 303. In this implementation, the pre-connectorized optical connector 303 is an outdoor pre-connectorized optical connector. The fiber grating 10 and the integrated ferrule part 30 are packaged by using a fiber threading and curing process, for fastening the fiber grating 10 in the first ferrule 32 and the second ferrule 34.

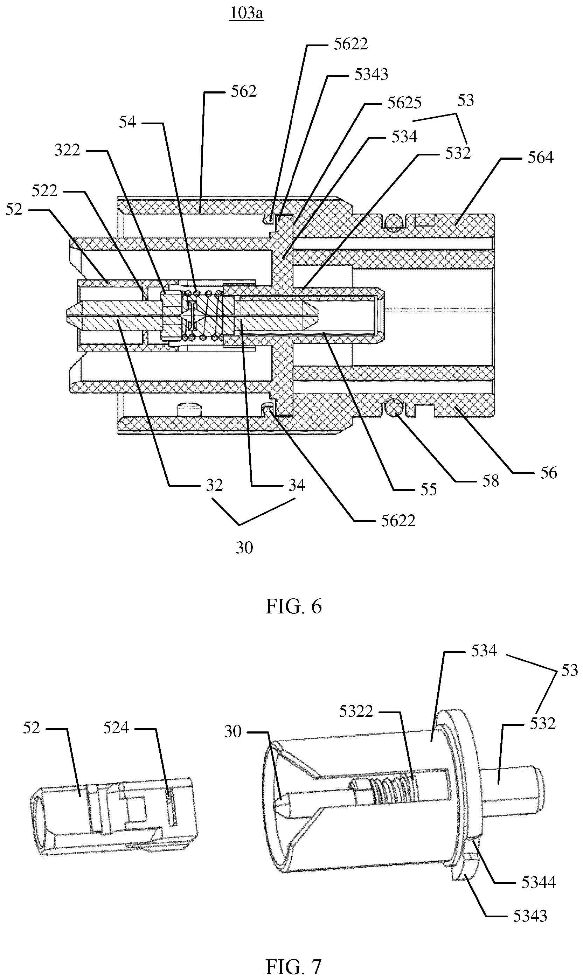

In this implementation, the first ferrule 32 and the second ferrule 34 are disposed integrally. A boss 322 (as shown in FIG. 6) is provided on an outer wall of the first ferrule 32, and is configured to be connected to the housing part 50. The first ferrule 32 and the second ferrule 34 are disposed integrally, facilitating simplification of a structure of the optical fiber connector 103a and reduction of an axial length of the optical fiber connector 103a.

During use, one end at which the first ferrule 32 of the optical fiber connector 103a is located is inserted into the optical adapter 102, one end at which the second ferrule 34 of the optical fiber connector 103a is located is interconnected to the pre-connectorized optical connector 303, and the fiber grating 10 in the optical fiber connector 103a modulates an optical signal. In this way, an optical splitter 101, the optical adapter 102, and the like in an existing network do not need to be disassembled or replaced, only the optical fiber connector 103a needs to be inserted into the optical adapter 102. Operations are simple, and this facilitates reconstruction of the existing network.

The housing part 50 includes an inner sleeve 52, a main shaft 53, an elastic piece 54, a sleeve 55, a handle 56, and a sealing ring 58. The inner sleeve 52 is sleeved on the first ferrule 32, and the main shaft 53 is sleeved on the first ferrule 32 and the second ferrule 34. The inner sleeve 52 and the main shaft 53 are connected together, for fastening the ferrule part 30 between the inner sleeve 52 and the main shaft 53. The elastic piece 54 is sleeved on the second ferrule 34, elastically abuts between the boss 322 of the second ferrule 34 and the main shaft 53, and is configured to provide a pre-tightening force when the ferrule part 30 is optically interconnected to the optical adapter 102 and/or the pre-connectorized optical connector 303, to improve accuracy and stability of optical interconnection of the optical fiber connector 103a. The sleeve 55 is sleeved outside the second ferrule 34, and is configured to protect the second ferrule 34. In this implementation, the sleeve 55 is a ceramic sleeve. It may be understood that a material of the sleeve 55 is not limited in this application, and the sleeve 55 may be omitted. The handle 56 is sleeved on the main shaft 53, and is configured to be connected to the optical adapter 102 and the pre-connectorized optical connector 303. The sealing ring 58 is sleeved on the handle 56, and is configured to be connected to the pre-connectorized optical connector 303 in a sealed manner when the handle 56 is connected to the pre-connectorized optical connector 303, to maintain air tightness, so that the optical fiber connector 103a has high waterproof and dustproof performance, and therefore can adapt to a complex outdoor environment.

A specific structure of the housing part 50 is not limited in this application. For example, in some implementations of this application, the elastic piece 54 and the sealing ring 58 may be omitted.

A limiting structure 522 is provided on an inner wall of the inner sleeve 52, and the limiting structure 522 can abut against one end of the boss 322 (as shown in FIG. 6), to prevent the ferrule part 30 from being detached from the inner sleeve 52. A first snapping portion 524 is provided on the inner wall of the inner sleeve 52, and is configured to be connected to the main shaft 53 in a snapping manner.

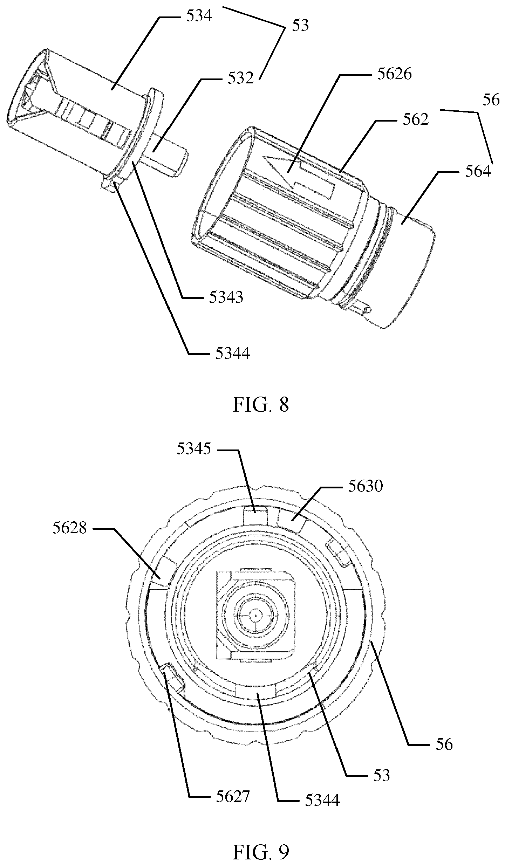

Refer to FIG. 7 and FIG. 8. The main shaft 53 includes an inner cylinder 532 and an outer cylinder 534 that are connected. The outer cylinder 534 is fastened to and sleeved on one end of the inner cylinder 532. A second snapping portion 5322 is provided on an outer wall of the inner cylinder 532. The second snapping portion 5322 is located in the outer cylinder 534. The inner sleeve 52 is accommodated in the outer cylinder 534, the inner sleeve 52 is sleeved outside the inner cylinder 532, and the inner sleeve 52 is located between the inner cylinder 532 and the outer cylinder 534. The first snapping portion 524 is connected to the second snapping portion 5322 in a snapping manner. In this way, the inner sleeve 52 and the main shaft 53 are connected together.

In this implementation, the first snapping portion 524 is a groove provided on the inner wall of the inner sleeve 52, and the groove may be a groove that runs through the inner wall of the inner sleeve 52 and an outer wall of the inner sleeve 52. The second snapping portion 5322 is a convex portion provided on the outer wall of the inner cylinder 532, and the second snapping portion 5322 is located in the first snapping portion 524 and is snapped to the first snapping portion 524. It may be understood that if the first snapping portion 524 is a convex portion provided on the inner wall of the inner sleeve 52, the second snapping portion 5322 is a groove provided on the outer wall of the inner cylinder 532, and the first snapping portion 524 is located in the second snapping portion 5322 and is snapped to the second snapping portion 5322.

In this implementation, there are two first snapping portions 524, and the two first snapping portions 524 are located on two sides of the inner sleeve 52. There are two second snapping portions 5322. The two first snapping portions 524 are provided opposite to each other, and the two second snapping portions 5322 are provided opposite to each other. Each first snapping portion 524 correspondingly fits one second snapping portion 5322. It may be understood that a quantity of the first snapping portions 524 and a position of the first snapping portion 524 are not limited in this application, and a quantity of the second snapping portions 5322 and a position of the second snapping portion 5322 are not limited in this application.

A flange 5343 is convexly disposed on an outer wall of the outer cylinder 534, and is configured to be connected to the handle 56 in a fitting manner. A limiting portion 5344 is provided on the flange 5343, and is configured to be connected to the handle 56 in a fitting manner. It may be understood that the flange 5343 may be omitted, and the limiting portion 5344 is provided on an outer wall of another part of the outer cylinder 534.

Refer to FIG. 8. The handle 56 includes a first end portion 562 and a second end portion 564. The first end portion 562 is sleeved on the main shaft 53, and the first ferrule 32 and the inner sleeve 52 are located in the first end portion 562. In this implementation, the first ferrule 32 is a male ferrule, the second ferrule 34 is a female ferrule, the first end portion 562 is a male end of the handle, and the second end portion 564 is a female end of the handle.

It may be understood that, in this application, the first ferrule 32 is not limited to the male ferrule, the second ferrule 34 is not limited to the female ferrule, the first end portion 562 is not limited to the male end of the handle, and the second end portion 564 is not limited to the female end of the handle.

Refer to FIG. 6, FIG. 8, FIG. 9, and FIG. 10. A fitting portion 5622 and a limiting boss 5625 are provided on an inner wall of the first end portion 562 of the handle 56, and the flange 5343 is limited between the fitting portion 5622 and the limiting boss 5625. In this way, the handle 56 and the main shaft 53 are connected together, and the handle 56 can be rotated relative to the main shaft 53.

The flange 5343 is limited between the fitting portion 5622 and the limiting boss 5625 in an axial direction of the main shaft 53, so that axial movement of the handle 56 relative to the main shaft 53 is limited and the handle 56 cannot move in the axial direction of the main shaft 53, but the handle 56 can be rotated around a circumferential direction of the handle 56, facilitating circumferential adjustment when the optical fiber connector 103a is connected to the optical adapter 102 or another optical connection apparatus.

In some implementations of this application, the limiting portion 5344 is a notch that runs through the flange 5343 in the axial direction of the main shaft 53, and the fitting portion 5622 is a convex portion provided on an inner wall of the handle 56. When the fitting portion 5622 is accommodated in the limiting portion 5344, the fitting portion 5622 and the limiting portion 5344 are in interference fit, so that when the flange 5343 is located between the fitting portion 5622 and the limiting boss 5625, it is difficult for the fitting portion 5622 to be detached from the limiting portion 5344 in the axial direction of the main shaft 53, to reduce a possibility that the main shaft 53 is detached from the handle 56. There may be two fitting portions 5622, and the two fitting portions 5622 may be provided opposite to each other. A quantity of the fitting portions 5622 is not limited in this application. For example, there may be one or more fitting portions 5622.

In some implementations of this application, refer to FIG. 9. A first limiting structure 5345 may be provided on an outer wall of the main shaft 53, and a second limiting structure 5628 and a third limiting structure 5630 may be provided on the inner wall of the first end portion 562 of the handle 56. In a circumferential direction of the main shaft 53, the first limiting structure 5345 is located between the second limiting structure 5628 and the third limiting structure 5630. When the main shaft 53 is rotated relative to the handle 56, the first limiting structure 5345 may move between the second limiting structure 5628 and the third limiting structure 5630. The limiting structures are provided to limit a rotation range of the handle 56 relative to the main shaft 53. For example, when the flange 5343 is located between the fitting portion 5622 and the limiting boss 5625, initially, the first limiting structure 5345 is not in contact with or abuts against either of the second limiting structure 5628 and the third limiting structure 5630, and the handle 56 may be rotated relative to the main shaft 53. After the handle 56 is rotated by a specific angle relative to the main shaft 53 in a first rotation direction, when the first limiting structure 5345 abuts against the second limiting structure 5628, it indicates that the handle 56 cannot continue to be rotated relative to the main shaft 53 in the first rotation direction. After the handle 56 is rotated by a specific angle relative to the main shaft 53 in a second rotation direction, when the first limiting structure 5345 abuts against the third limiting structure 5630, it indicates that the handle 56 cannot continue to be rotated relative to the main shaft 53 in the second rotation direction.

An indication mark 5626 is provided on an outer wall of the first end portion 562 of the handle 56, and is used to perform indication for assembly between the handle 56 and the main shaft 53, facilitating assembly for the user. The indication mark 5626 may be a pattern such as an arrow. A form (for example, a graph, a structure, or a material) of the indication mark 5626 is not limited in this application. In the circumferential direction of the handle 56, an included angle between the fitting portion 5622 and the indication mark 5626 is approximately a right angle. It may be understood that a range of the included angle between the fitting portion 5622 and the indication mark 5626 is not limited in this application.

During assembly, the fiber grating 10, the ferrule part 30, the inner sleeve 52, and the main shaft 53 are first assembled into a pre-assembled body. In the circumferential direction of the handle 56, the limiting portion 5344 is aligned with the indication mark 5626 at an angle of 45 degrees. The pre-assembled body is pushed into the handle 56 from a port of the first end portion 562 of the handle 56. Under an action of an external force, the fitting portion 5622 passes through the limiting portion 5344, and the flange 5343 is located between the fitting portion 5622 and the limiting boss 5625. In this way, the main shaft 53 and the handle 56 are connected together. Because the fitting portion 5622 abuts against the flange 5343, after the fitting portion 5622 passes through the limiting portion 5344, the handle 56 cannot move in the axial direction of the main shaft 53, and the handle 56 can move around the circumferential direction of the handle 56. It may be understood that, in this application, an angle at which the limiting portion 5344 is aligned with the indication mark 5626 is not limited to 45 degrees.

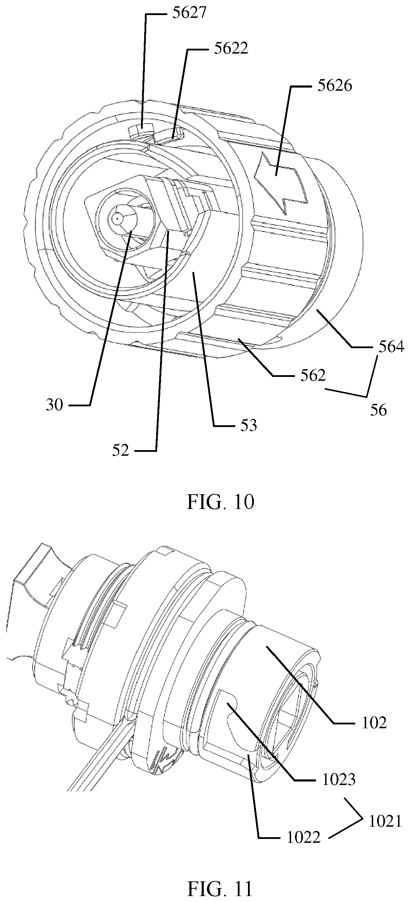

Refer to FIG. 9 and FIG. 10. A locking boss 5627 is further provided on the inner wall of the first end portion 562, and is configured to be connected to the optical adapter 102. The locking boss 5627 is spaced apart from the fitting portion 5622 in an axial direction of the handle 56. In comparison with the fitting portion 5622, the locking boss 5627 is closer to an end face of the first end portion 562 away from the second end portion 564. In a direction perpendicular to the axial direction of the handle 56, a width size of the locking boss 5627 is smaller than a width size of the fitting portion 5622. In this way, when the main shaft 53 and the handle 56 are assembled, the locking boss 5627 can pass through the limiting portion 5344 without affecting assembly between the handle 56 and the main shaft 53. There may be two locking bosses 5627, and the two locking bosses 5627 may be provided opposite to each other, to improve stability when the optical fiber connector 103a and the optical adapter 102 are connected together. A quantity of locking bosses 5627 is not limited in this application. For example, there may be one locking boss 5627. In some implementations of this application, the locking boss 5627 may alternatively not be spaced apart from the fitting portion 5622 in the axial direction of the handle 56.

Refer to FIG. 11. An interface groove channel 1021 is provided on an interface that is of the optical adapter 102 and that is adapted to the handle 56. The interface groove channel 1021 of the optical adapter 102 is configured to be connected to the locking boss 5627 in a snapping manner. The interface groove channel 1021 of the optical adapter 102 includes a groove channel opening 1022 and a snap groove 1023 connected to the groove channel opening 1022. The groove channel opening 1022 of the optical adapter 102 runs through an end face of the optical adapter 102, and the snap groove 1023 extends in a circumferential direction of the optical adapter 102.

Refer to FIG. 10 and FIG. 11. When the optical adapter 102 and the first end portion 562 of the handle 56 need to be connected together, the optical adapter 102 is inserted into the first end portion 562 of the handle 56, and the locking boss 5627 enters the interface groove channel 1021 from the groove channel opening 1022. When the locking boss 5627 cannot continue to move in an axial direction of the optical adapter 102, the handle 56 is rotated in one direction, for snapping the locking boss 5627 in the snap groove 1023. In this way, the optical adapter 102 and the handle 56 are locked together. When the optical adapter 102 and the handle 56 need to be unlocked, the entire optical fiber connector 103a is rotated in another direction, for detaching the locking boss 5627 from the snap groove 1023. In this way, the entire optical fiber connector 103a can be taken out of the optical adapter 102.

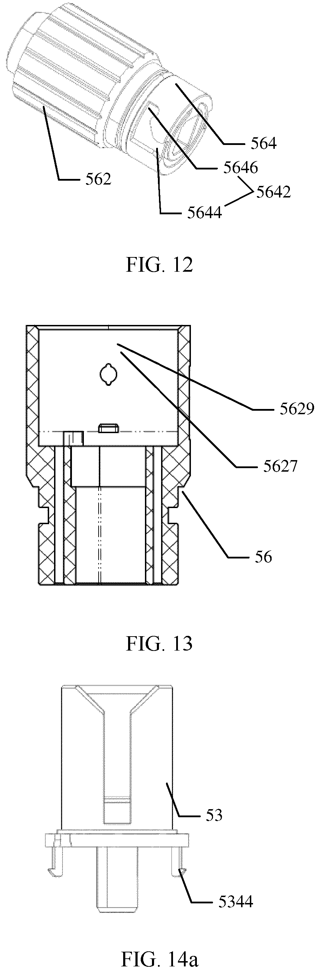

Refer to FIG. 12. An interface groove channel 5642 adapted to the pre-connectorized optical connector 303 is provided on an outer wall of the second end portion 564, and is configured to be connected to the pre-connectorized optical connector 303. A structure of the interface groove channel of the second end portion 564 is similar to that of the interface groove channel of the optical adapter 102. The interface groove channel 5642 includes a groove channel opening 5644 and a snap groove 5646 connected to the groove channel opening 5644. The groove channel opening 5644 of the second end portion 564 runs through an end face of the second end portion 564, and the snap groove 5646 extends in the circumferential direction of the handle 56. A coupling interface fitting the second end portion 564 is provided on the pre-connectorized optical connector 303, and a locking key (not shown in the figure) fitting the interface groove channel 5642 is provided on an inner wall of the coupling interface. When the second end portion 564 and the pre-connectorized optical connector 303 need to be connected, the second end portion 564 is inserted into the coupling interface of the pre-connectorized optical connector 303, and the locking key can enter the interface groove channel 5642 from the groove channel opening 5644. The pre-connectorized optical connector 303 is rotated in one direction relative to the handle 56, and the locking key enters the snap groove 5646. In this case, the pre-connectorized optical connector 303 is locked with the handle 56. When the pre-connectorized optical connector 303 and the handle 56 need to be unlocked, the pre-connectorized optical connector 303 is rotated in another direction relative to the handle 56. In this case, the locking key can be detached from the snap groove 5646. Because the limiting portion 5344 and the fitting portion 5622 are in interference fit, when the pre-connectorized optical connector 303 and the handle 56 are unlocked, a possibility that the main shaft 53 is rotated relative to the handle 56 can be reduced.

In a possible implementation, a convex rib 5629 (as shown in FIG. 13) may be disposed on the locking boss 5627, to enhance a limiting function between the handle 56 and the optical adapter 102, and reduce a possibility that the handle 56 moves relative to the optical adapter 102.

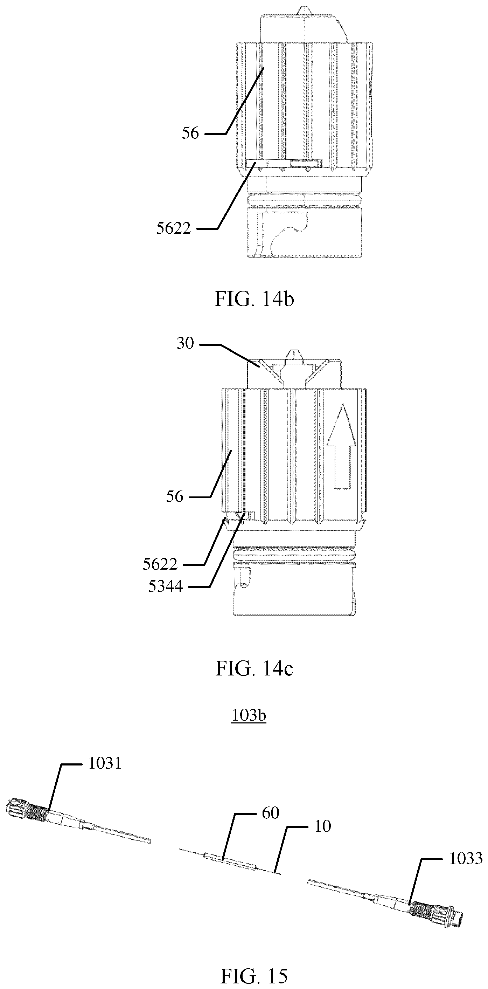

In some possible implementations, the limiting portion 5344 may alternatively be an elastic buckle (as shown in FIG. 14a), the fitting portion 5622 may be a groove (as shown in FIG. 14b) provided on the inner wall of the handle 56, and the fitting portion 5622 extends in the circumferential direction of the handle 56. For example, the fitting portion 5622 is a groove that runs through the inner wall and the outer wall of the handle 56, the limiting portion 5344 is connected to the fitting portion 5622 in a snapping manner (as shown in FIG. 14c), to limit the main shaft 53 to move relative to the handle 56 in the circumferential direction.

In the implementation solutions provided in FIG. 3 to FIG. 14c, one end (the end at which the first ferrule 32 is located) of the optical fiber connector 103a may be connected to, for example, the network port of the optical splitter, and the other end (the end at which the second ferrule 34 is located) may be connected to an SC interface-based Huawei outdoor connector. In this case, the optical fiber connector 103a may also be referred to as an optical fiber adapter.

Refer to FIG. 15, FIG. 16, and FIG. 17. A second implementation of this application provides an optical fiber connector 103b. The optical fiber connector 103b includes a fiber grating 10, a first ferrule 32, a second ferrule 34, a housing part, and a protective part 60. The first ferrule 32 and the second ferrule 34 are disposed separately. The housing part includes a first housing assembly 501 and a second housing assembly 503. The fiber grating 10 penetrates through the first ferrule 32, the second ferrule 34, the first housing assembly 501, and the second housing assembly 503. The protective part 60 coats the fiber grating 10, and is configured to protect the fiber grating 10.

The first ferrule 32 and the first housing assembly 501 may form a first optical fiber connector 1031. The second ferrule 34 and the second housing assembly 503 may form a second optical fiber connector 1033. In other words, the optical fiber connector 103b may include the first optical fiber connector 1031 and the second optical fiber connector 1033 that are disposed separately. The first optical fiber connector 1031 is configured to be optically interconnected to an optical adapter, and the second optical fiber connector 1033 is configured to be optically interconnected to a pre-connectorized optical connector. In this implementation, the first optical fiber connector 1031 may be a male connector, and the second optical fiber connector 1033 may be a female connector.

In comparison with the first implementation of this application, the first ferrule 32 and the second ferrule 34 are disposed separately. One end of the fiber grating 10 penetrates through the first ferrule 32 and the first housing assembly 501, and the other end of the fiber grating 10 penetrates through the second ferrule 34 and the second housing assembly 503.

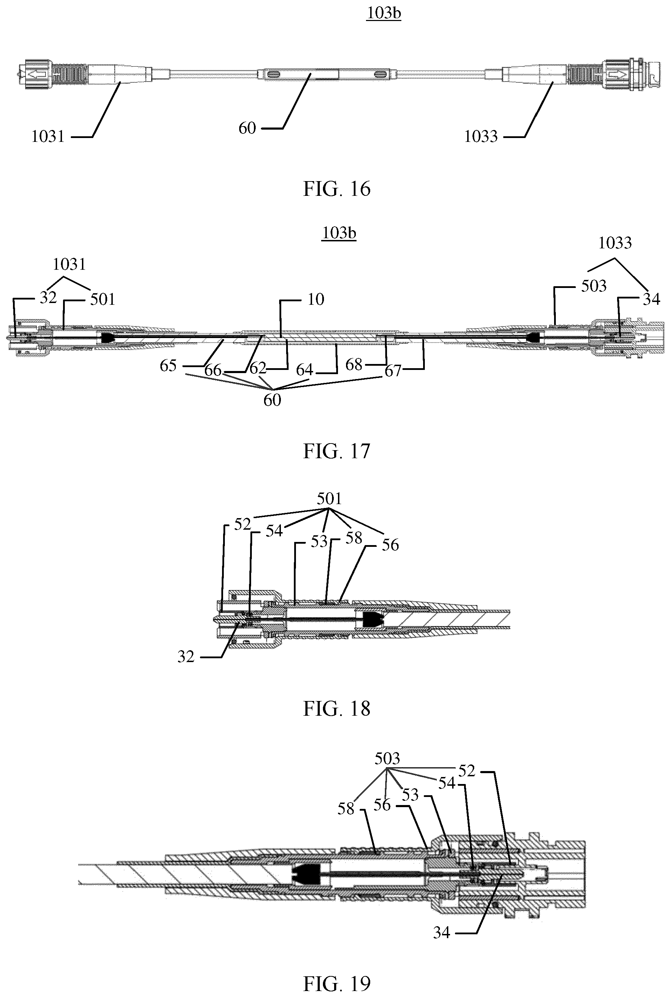

Refer to FIG. 18 and FIG. 19. The first housing assembly 501 and the second housing assembly 503 each includes an inner sleeve 52, a main shaft 53, an elastic piece 54, a handle 56, and a sealing ring 58. In the first optical fiber connector 1031, the inner sleeve 52 is sleeved on the first ferrule 32, the main shaft 53 is sleeved on the first ferrule 32 and is connected to the inner sleeve 52, the elastic piece 54 is sleeved on the first ferrule 32 and elastically abuts between the first ferrule 32 and the main shaft 53, the handle 56 is sleeved on the main shaft 53 and is connected to the main shaft 53 in a snapping manner, the sealing ring 58 is sleeved on the main shaft 53 and is accommodated in the handle 56, the sealing ring 58 is connected to the main shaft 53 in a sealed manner, and the sealing ring 58 is connected to the handle 56 in a sealed manner. In the second optical fiber connector 1033, the inner sleeve 52 is sleeved on the second ferrule 34, the main shaft 53 is sleeved on the second ferrule 34 and is connected to the inner sleeve 52 in a snapping manner, the elastic piece 54 is sleeved on the first ferrule 32 and elastically abuts between the second ferrule 34 and the main shaft 53, the handle 56 is sleeved on the main shaft 53 and is connected to the main shaft 53, the sealing ring 58 is sleeved on the main shaft 53 and is accommodated in the handle 56, the sealing ring 58 is connected to the main shaft 53 in a sealed manner, and the sealing ring 58 is connected to the handle 56 in a sealed manner. It may be understood that the main shaft 53 may alternatively be sleeved on the inner sleeve 52, and the main shaft 53 is connected to the inner sleeve 52.

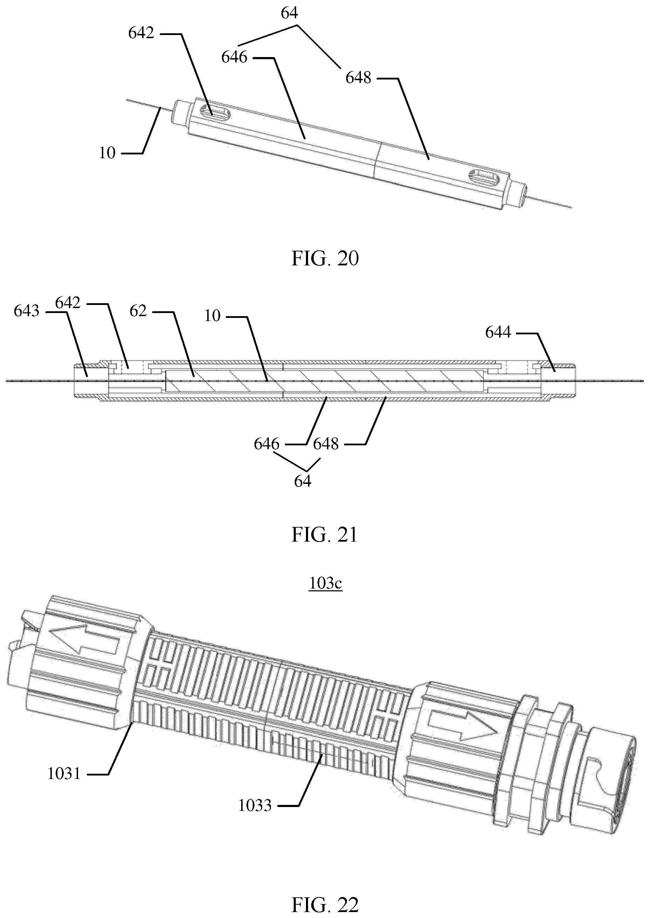

Refer to FIG. 20 and FIG. 21. The protective part 60 includes a package body 62 and a protective sleeve 64. The package body 62 coats a part of the fiber grating 10, and is configured to protect the fiber grating 10. Impact of an external force on the fiber grating 10 can be reduced via the package body 62. The package body 62 is located between the handle 56 of the first housing assembly 501 and the handle 56 of the second housing assembly 503. The package body 62 is independent of the first housing assembly 501 and the second housing assembly 503. The protective sleeve 64 is sleeved on the package body 62 to accommodate the package body 62 and protect the fiber grating 10. A filling opening 642 is provided on the protective sleeve 64, and is configured to fill the package body 62 into the protective sleeve 64. In this implementation, the package body 62 is a colloid. Because the fiber grating 10 is independently packaged in the package body 62 of the protective sleeve 64, load conduction to the fiber grating 10 by a component outside the package body 62, for example, the first ferrule 32 or the second ferrule 34, is reduced. A load is usually impact of the external force such as side tension.

The protective sleeve 64 further includes, in an axial direction of the protective sleeve 64, a first optical cable interface 643 and a second optical cable interface 644 that are provided opposite to each other. The protective sleeve 64 may further include a first sub-sleeve 646 and a second sub-sleeve 648 that are spliced, and the first sub-sleeve 646 is located between the first housing assembly 501 and the second sub-sleeve 648. The first optical cable interface 643 may be located on the first sub-sleeve 646, and the second optical cable interface 644 may be located on the second sub-sleeve 648. It may be understood that, in this application, the protective sleeve 64 may include a plurality of sub-sleeves, and the protective sleeve 64 may alternatively be integrated.

The optical fiber connector 103b further includes a first coating layer 65, a first reinforcing piece 66, a second coating layer 67, and a second reinforcing piece 68. The first coating layer 65 coats a part of fiber grating 10, and the first coating layer 65 is located between the protective sleeve 64 and the first housing assembly 501, and is configured to protect the fiber grating 10 located between the protective sleeve 64 and the first housing assembly 501. The first reinforcing piece 66 is located between the first coating layer 65 and the fiber grating 10, and is configured to bear a mechanical stress that may be applied to the fiber grating 10 located between the protective sleeve 64 and the first housing assembly 501. The first reinforcing piece 66 is flexibly connected to the package body 62 at the first optical cable interface 643. The second coating layer 67 covers a part of fiber grating 10, and the second coating layer 67 is located between the protective sleeve 64 and the second housing assembly 503, and is configured to protect the fiber grating 10 located between the protective sleeve 64 and the second housing assembly 503. The second reinforcing piece 68 is located between the second coating layer 67 and the fiber grating 10, and is configured to bear a mechanical stress that may be applied to the fiber grating 10 located between the protective sleeve 64 and the second housing assembly 503. The second reinforcing piece 68 is flexibly connected to the package body 62 at the second optical cable interface 644. The flexible connection means that the fiber grating 10 may be stretched, bent, and twisted freely under separated ferrule arrangement.

When the optical fiber connector 103b is assembled, an optical cable is processed, for example, a coating layer and a reinforcing piece are stripped from a part of the optical cable, and a part of the optical cable is coated with the coating layer to form the fiber grating 10, the first coating layer 65, the second coating layer 67, the first reinforcing piece 66, and the second reinforcing piece 68. The fiber grating 10 penetrates through the protective sleeve 64, the first optical fiber connector 1031, and the second optical fiber connector 1033. The package body 62 is filled into the protective sleeve 64, for fastening the first reinforcing piece 66 and the second reinforcing piece 68 to the package body 62.

When the optical fiber connector is optically interconnected to the optical adapter or another optical connection apparatus, and the optical fiber connector is connected to the pre-connectorized optical connector or another optical connection apparatus, accuracy of the optical connection of the optical fiber connector is easily affected if the fiber grating is affected by an external load (external force), and optical transmission quality is further affected. In this implementation, the fiber grating 10 is independently packaged in the package body 62 outside the first optical fiber connector 1031 and the second optical fiber connector 1033, and the package body 62 is flexibly connected to the first reinforcing piece and the second reinforcing piece, to reduce impact of the load of the first optical fiber connector 1031 and the second optical fiber connector 1033 on the fiber grating 10, and facilitate improvement of precision and reliability of the optical interconnection of the optical fiber connector 103b.

In some implementations of this application, one end of the protective sleeve 64 may be directly connected to one of the first optical fiber connector 1031 and the second optical fiber connector 1033. The protective sleeve 64 may include one optical cable interface. Only one reinforcing piece and one coating layer may be provided on the optical fiber connector 103b. The reinforcing piece is flexibly connected to the package body at the optical cable interface. For example, in the axial direction of the protective sleeve 64, the protective sleeve 64 includes the first optical cable interface 643 arranged close to the first ferrule 32. The optical fiber connector further includes the first coating layer 65 and the first reinforcing piece 66. The first coating layer 65 coats the fiber grating 10 and is located between the protective sleeve 64 and the first ferrule 32, the first reinforcing piece 66 is located between the first coating layer 65 and the fiber grating 10, and the first reinforcing piece 66 is flexibly connected to the package body 62 at the first optical cable interface 643.

Refer to FIG. 22, FIG. 23, and FIG. 24. A third implementation of this application provides an optical fiber connector 103c. The optical fiber connector 103c provided in the third implementation of this application is approximately similar to the optical fiber connector 103b provided in the second implementation. A first ferrule 32 and a first housing assembly 501 may form a first optical fiber connector 1031. A second ferrule 34 and a second housing assembly 503 may form a second optical fiber connector 1033. The first housing assembly 501 and the second housing assembly 503 each includes an inner sleeve 52, a main shaft 53, an elastic piece 54, and a handle 56. In the first optical fiber connector 1031, the inner sleeve 52 is sleeved on the first ferrule 32, the main shaft 53 is sleeved on the inner sleeve 52 and is connected to the inner sleeve 52, the elastic piece 54 is sleeved on the first ferrule 32 and elastically abuts between the first ferrule 32 and the main shaft 53, and the handle 56 is sleeved on the main shaft 53 and is connected to the main shaft 53 in a snapping manner. In the second optical fiber connector 1033, the inner sleeve 52 is sleeved on the second ferrule 34, the main shaft 53 is sleeved on the inner sleeve 52 and is connected to the inner sleeve 52 in a snapping manner, the elastic piece 54 is sleeved on the first ferrule 32 and elastically abuts between the second ferrule 34 and the main shaft 53, and the handle 56 is sleeved on the main shaft 53 and is connected to the main shaft 53 in a snapping manner. A difference lies in at least that the protective sleeve, the first coating layer, the second coating layer, the first reinforcing piece, the second reinforcing piece, and the like are omitted in the optical fiber connector 103c, and the first housing assembly 501 and the second housing assembly 503 are spliced together. The first housing assembly 501 and the second housing assembly 503 each further include a ferrule base 59.

The ferrule base 59 of the first housing assembly 501 is fastened to the first ferrule 32, and the ferrule base 59 of the second housing assembly 503 is fastened to the second ferrule 34. The first ferrule 32, the ferrule base 59 of the first housing assembly 501, the ferrule base 59 of the second housing assembly 503, and the second ferrule 34 are sequentially arranged in an axial direction of the optical fiber connector 103c. The fiber grating 10 penetrates through the ferrule base 59 of the first housing assembly 501 and the ferrule base 59 of the second housing assembly 503. The main shaft 53 of the first housing assembly 501 is sleeved on the ferrule base 59 of the first housing assembly 501, and the main shaft 53 of the second housing assembly 503 is sleeved on the ferrule base 59 of the second housing assembly 503. An end face of the main shaft 53 of the first housing assembly 501 is opposite to an end face of the main shaft 53 of the second housing assembly 503, for splicing the end face of the main shaft 53 of the first housing assembly 501 and the end face of the main shaft 53 of the second housing assembly 503 together. An end face of the handle 56 of the first housing assembly 501 is opposite to an end face of the handle 56 of the second housing assembly 503, for splicing the end face of the handle 56 of the first housing assembly 501 and the end face of the handle 56 of the second housing assembly 503 together. A package body 62 is accommodated in the ferrule base 59 of the first housing assembly 501 and the ferrule base 59 of the second housing assembly 503.

The main shaft 53 of the first housing assembly 501 and the main shaft 53 of the second housing assembly 503 are spliced together. The handle 56 of the first housing assembly 501 and the handle 56 of the second housing assembly 503 are spliced together. The package body 62 is accommodated in the ferrule base 59 of the first housing assembly 501 and the ferrule base 59 of the second housing assembly 503, so that the fiber grating 10, the first ferrule 32, the second ferrule 34, the first housing assembly 501, and the second housing assembly 503 form a whole, and the fiber grating 10 cannot move along the optical fiber connector 103c. This is equivalent to that the fiber grating 10 is rigidly connected to the first ferrule 32, the second ferrule 34, the first housing assembly 501, and the second housing assembly 503. This facilitates improvement of reliability of the optical fiber connector 103c.

The optical fiber connector 103c further includes a sealing ring 58. The sealing ring 58 is sleeved on the main shaft 53 of the first housing assembly 501 and the main shaft 53 of the second housing assembly 503, and the sealing ring 58 is accommodated in the handle 56 of the first housing assembly 501 and the handle 56 of the second housing assembly. The sealing ring 58 is configured to seal a splicing position between the main shaft 53 of the first housing assembly 501 and the main shaft 53 of the second housing assembly 503, and seal a splicing position between the handle 56 of the first housing assembly 501 and the handle 56 of the second housing assembly.

In some implementations of this application, the sealing ring 58 is accommodated in the handle 56 of the first housing assembly 501 and/or the handle 56 of the second housing assembly.

In this implementation, a first connection portion 526 is provided on an inner wall of each inner sleeve 52, a second connection portion 592 is provided on an outer wall of each ferrule base 59, and the first connection portion 526 is connected to the second connection portion 592 in a snapping manner. The inner sleeve 52 is connected to the ferrule base 59 in a snapping manner, facilitating assembly and disassembly of the optical fiber connector 103c.

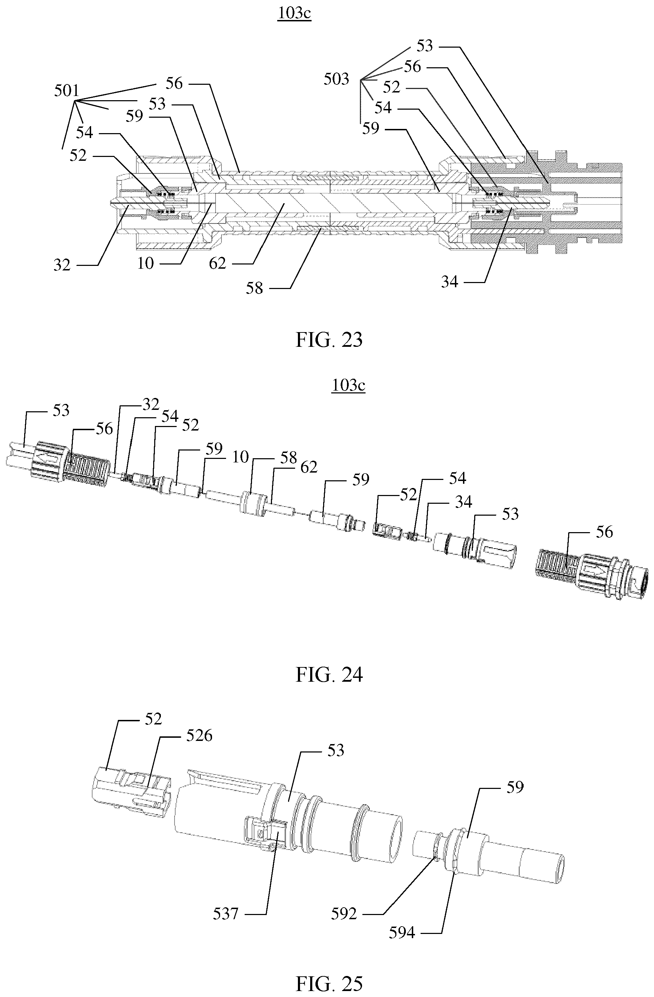

In this implementation, as shown in FIG. 25, a first joint portion 537 is provided on an inner wall of the main shaft 53, a second joint portion 594 is provided on the outer wall of the ferrule base 59, and the first joint portion 537 fits the second joint portion 594 in a snapping manner. The first joint portion 537 may include a snap groove provided on the inner wall of the main shaft 53, and the second joint portion 594 may include a boss provided on the outer wall of the ferrule base 59. The main shaft 53 is connected to the ferrule base 59 in a snapping manner. This facilitates assembly and disassembly of the optical fiber connector 103c. It may be understood that the first joint portion 537 may include a boss provided on the inner wall of the main shaft 53, and the second joint portion 594 may include a groove provided on the outer wall of the ferrule base 59.

The first housing assembly 501 and the second housing assembly 503 form a whole after assembly is completed, so that the fiber grating 10 is rigidly connected to the first housing assembly 501, and the second housing assembly 503. The rigid connection means that the fiber grating 10 is in a fastened state and cannot be stretched under separated ferrule arrangement.

In some implementations of this application, the package body 62 may be omitted, and the fiber grating 10 directly penetrates through the first ferrule 32, the ferrule base 59 of the first housing assembly 501, the second ferrule 34, and the ferrule base 59 of the second housing assembly 503. The first housing assembly 501 and the second housing assembly 503 that are disposed separately are spliced into a whole, facilitating reduction of an axial length of the optical fiber connector 103c.

In some implementations of this application, the ferrule base 59 of the first housing assembly 501 and the ferrule base 59 of the second housing assembly 503 may be omitted, and the package body 62 is accommodated in at least one of the main shaft 53 of the first housing assembly 501 and the main shaft 53 of the second housing assembly 503.

When no conflict occurs, the first implementation, the second implementation, and the third implementation of this application may be combined with each other.

In conclusion, the optical splitter in the existing network does not need to be reconstructed. The fiber grating is embedded in the optical fiber connector by using a structure design, to implement port resource identification and analysis, and optical path restoration.

It should be understood that expressions such as "include" and "may include" that can be used in this application represent existence of disclosed functions, operations, or constituent elements, and are not limited to one or more additional functions, operations, or constituent elements. In this application, terms such as "include" and/or "have" may be construed as indicating a specific characteristic, quantity, operation, constituent element, or component, or a combination thereof, but cannot be construed as excluding existence or a possibility of addition of one or more other characteristics, quantities, operations, constituent elements, or components, or combinations thereof.

In addition, in this application, the expression "and/or" includes any and all combinations of listed associated words. For example, the expression "A and/or B" may include A, may include B, or may include both A and B.

In this application, expressions including ordinal numbers such as "first" and "second" may modify elements. However, the elements are not limited by the expressions. For example, the expressions do not limit an order and/or importance of the elements. The expression is used only to distinguish one element from another. For example, first user equipment and second user equipment indicate different user equipment, although both the first user equipment and the second user equipment are user equipment. Similarly, without departing from the scope of this application, a first element may be referred to as a second element, and similarly, a second element may also be referred to as a first element.

When a component "is connected to" or "assesses" another component, it should be understood that the component not only is directly connected to or assesses another component, but there may be another component between the component and the another component. In addition, when the component "is directly connected to" or "directly accesses" the another component, it should be understood that there is no component between the component and the another component.

The foregoing descriptions are merely specific implementations of this application, but are not intended to limit a protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. An optical fiber connector, comprising:
a first ferrule (32);
a second ferrule (34);
a fiber grating (10), penetrating through the first ferrule (32) and the second ferrule (34); and
a housing part (50), comprising an inner sleeve (52), a main shaft (53), a handle (56), and a sealing ring (58), wherein the inner sleeve (52) is sleeved on the first ferrule (32) and the second ferrule (34), the main shaft (53) is connected to the inner sleeve (52), the handle (56) is sleeved on the main shaft (53), and the sealing ring (58) is sleeved on the handle (56) or the main shaft (53).

2. The optical fiber connector according to claim 1, wherein the first ferrule (32) and the second ferrule (34) are disposed integrally.

3. The optical fiber connector according to claim 1, wherein the first ferrule (32) and the second ferrule (34) are disposed separately.

4. The optical fiber connector according to claim 3, wherein the optical fiber connector further comprises a package body (62), and the package body (62) coats a part of the fiber grating (10).

5. The optical fiber connector according to claim 4, wherein the optical fiber connector further comprises a protective sleeve (64), the package body (62) is accommodated in the protective sleeve (64), and the protective sleeve (64) is located outside the housing part (50).

6. The optical fiber connector according to claim 5, wherein a filling opening (642) is provided on the protective sleeve (64), and the filling opening (642) is configured to fill the package body (62) into the protective sleeve (64).

7. The optical fiber connector according to claim 5, wherein in an axial direction of the protective sleeve (64), the protective sleeve (64) comprises a first optical cable interface (643) provided close to the first ferrule (32), and
the optical fiber connector further comprises a first coating layer (65) and a first reinforcing piece (66), wherein the first coating layer (65) coats the fiber grating (10), and the first reinforcing piece (66) is flexibly connected to the package body (62) at the first optical cable interface (643).

8. The optical fiber connector according to claim 1, wherein the housing part (50) comprises a first housing assembly (501) and a second housing assembly (503), and the first housing assembly (501) and the second housing assembly (503) each comprise the inner sleeve (52), the main shaft (53), and the handle (56), wherein
the inner sleeve (52) of the first housing assembly (501) is sleeved on the first ferrule (32), the main shaft (53) of the first housing assembly (501) is connected to the inner sleeve (52) of the first housing assembly (501), and the handle (56) of the first housing assembly (501) is sleeved on the main shaft (53); and
the inner sleeve (52) of the second housing assembly (503) is sleeved on the second ferrule (34), the main shaft (53) of the second housing assembly (503) is connected to the inner sleeve (52) of the second housing assembly (503), and the handle (56) of the second housing assembly (503) is sleeved on the main shaft (53) of the second housing assembly (503).

9. The optical fiber connector according to claim 8, wherein the optical fiber connector further comprises a package body (62) coating the fiber grating (10), and the package body (62) is accommodated in at least one of the main shaft (53) of the first housing assembly (501) and the main shaft (53) of the second housing assembly (503); and
an end face of the main shaft (53) of the first housing assembly (501) is opposite to an end face of the main shaft (53) of the second housing assembly (503), an end face of the handle (56) of the first housing assembly (501) is opposite to an end face of the handle (56) of the second housing assembly (503), the sealing ring (58) is sleeved on the main shaft (53) of the first housing assembly (501) and the main shaft (53) of the second housing assembly (503), and the sealing ring (58) is accommodated in the handle (56) of the first housing assembly (501) and/or the handle (56) of the second housing assembly (503).

10. The optical fiber connector according to claim 9, wherein the first housing assembly (501) and the second housing assembly (503) each further comprise a ferrule base (59), wherein
the ferrule base (59) of the first housing assembly (501) is fastened to the first ferrule (32), the ferrule base (59) of the second housing assembly (503) is fastened to the second ferrule (34), the first ferrule (32), the ferrule base (59) of the first housing assembly (501), the ferrule base (59) of the second housing assembly (503), and the second ferrule (34) are sequentially arranged in an axial direction of the optical fiber connector, the fiber grating (10) penetrates through the ferrule base (59) of the first housing assembly (501) and the ferrule base (59) of the second housing assembly (503), the main shaft (53) of the first housing assembly (501) is sleeved on the ferrule base (59) of the first housing assembly (501), and the main shaft (53) of the second housing assembly (503) is sleeved on the ferrule base (59) of the second housing assembly (503).

11. The optical fiber connector according to claim 10, wherein the package body (62) is accommodated in the ferrule base (59) of the first housing assembly (501) and the ferrule base (59) of the second housing assembly (503).

12. The optical fiber connector according to claim 10, wherein a first joint portion (537) is provided on an inner wall of the main shaft (53), a second joint portion (594) is provided on an outer wall of the ferrule base (59), and the first joint portion (537) fits the second joint portion (594) in a snapping manner.

13. The optical fiber connector according to claim 10, wherein a first connection portion (526) is provided on an inner wall of the inner sleeve (52), a second connection portion (592) is provided on an outer wall of the ferrule base (59), and the first connection portion (526) fits the second connection portion (592) in a snapping manner.

14. The optical fiber connector according to claim 1, wherein a first snapping portion (524) is provided on an inner wall of the inner sleeve (52), a second snapping portion (5322) is provided on the main shaft (53), and the first snapping portion (524) is connected to the second snapping portion (5322) in a snapping manner.

15. The optical fiber connector according to claim 14, wherein the main shaft (53) comprises an inner cylinder (532) and an outer cylinder (534) that are connected, the second snapping portion (5322) is located in the outer cylinder (534), and the inner sleeve (52) is accommodated in the outer cylinder (534).

16. The optical fiber connector according to claim 15, wherein a flange (5343) is disposed on an outer wall of the outer cylinder (534), the handle (56) comprises a first end portion (562) and a second end portion (564) that are provided opposite to each other, a fitting portion (5622) and a limiting boss (5625) are provided on an inner wall of the first end portion (562), and the flange (5343) is limited between the fitting portion (5622) and the limiting boss (5625) in an axial direction of the main shaft (53).

17. The optical fiber connector according to claim 16, wherein a limiting portion (5344) is provided on the flange (5343), the limiting portion (5344) is a notch that runs through the flange (5343) in the axial direction of the main shaft (53), the fitting portion (5622) is a convex portion, and the fitting portion (5622) abuts against the flange (5343).

18. The optical fiber connector according to claim 16, wherein a limiting portion (5344) is provided on the flange (5343), one of the limiting portion (5344) and the fitting portion (5622) is an elastic buckle, one of the limiting portion (5344) and the fitting portion (5622) is a groove, the groove extends in a circumferential direction of the handle (56), and the elastic buckle is snapped in the groove.

19. The optical fiber connector according to claim 16, wherein a locking boss (5627) is further provided on the inner wall of the first end portion (562).

20. The optical fiber connector according to claim 16, wherein an interface groove channel (5642) is provided on an outer wall of the second end portion (564), the interface groove channel (5642) comprises a groove channel opening (5644) and a snap groove (5646) connected to the groove channel opening (5644), the groove channel opening (5644) runs through an end face of the second end portion (564), and the snap groove (5646) extends in a circumferential direction of the handle (56).

21. An optical distribution network device (1), wherein the optical distribution network device (1) comprises a network port (1011), an optical adapter (102) and the optical fiber connector (103a) according to any one of claims 1 to 20 are disposed on the network port (1011), and one end of the optical fiber connector (103a) is inserted into the optical adapter (102).

22. An optical communication system (1000), comprising an optical distribution network (1002), an optical network terminal (1003), and an optical line terminal (1001), wherein the optical distribution network (1002) comprises at least one optical distribution network device (1) according to claim 21.
